# FASCICULE DE BREVET EUROPEEN

(11) **EP 2 694 388 B1**
(45) Date de publication et mention de la délivrance du brevet: **17.08.2016**
(21) Numéro de dépôt: 12720246.3
(22) Date de dépôt: 05.04.2012
(51) Int. Cl.: B65D 47/18, A45D 34/04

(54) **DISTRIBUTEUR COMPTE-GOUTTES.**
TROPFSPENDER
DROPPER DISPENSER

(30) Priorité: 07.04.2011 FR 1153040
(43) Date de publication de la demande: 12.02.2014
(73) Titulaire: Aptar France SAS, 27110 Le Neubourg (FR)
(72) Inventeur: DUQUET, Frédéric, F-78121 Crespières (FR); MARTINS-REIS, Sandra, F-92190 Meudon (FR); MOREAU, Francis, F-76300 Sotteville Les Rouen (FR)
(74) Mandataire: CAPRI
(86) Numéro de dépôt international: PCT/FR2012/050740
(87) Numéro de publication internationale: WO 2012/136938

(56) Documents cités:
- EP-A1- 2 576 379
- WO-A1-94/18526
- FR-A1- 2 549 015
- US-A- 4 955 745
- US-A- 5 614 172

## Description

La présente invention concerne un distributeur du type compte-gouttes permettant de distribuer un produit fluide sous forme de gouttes. Les gouttes sont distribuées les unes à la suite des autres. La ou les goutte(s) tombe(nt) du distributeur par gravité sur une surface d'application souhaitée. Les domaines d'application privilégiés de la présente invention sont ceux de la parfumerie, de la cosmétique ou encore de la pharmacie.

Dans l'art antérieur, on connaît déjà des distributeurs compte-gouttes pour distribuer des produits fluides, tels que des médicaments, des lotions, des huiles, et plus récemment des sérums dans le domaine de la cosmétique et de la parfumerie. De manière conventionnelle, le distributeur compte-gouttes comprend un tube relié associé à une pièce souple, tel qu'un bulbe écrasable définissant une chambre de produit fluide de volume variable. Le tube plonge dans un réservoir de produit fluide, et l'écrasement puis le relâchement.du bulbe permet de remplir la chambre par aspiration à travers le tube. Le tube comprend une extrémité de distribution qui est configurée de telle sorte que le produit fluide présent dans la chambre et le tube est retenu par capillarité. De plus, l'extrémité de distribution du tube est conçue de telle sorte que l'écrasement contrôlé du bulbe conduit à une distribution successive de gouttes correctement formées. La gestuelle d'utilisation de ce distributeur compte-gouttes est simple : on commence par écraser et relâcher le bulbe alors que le tube plonge dans un réservoir de produit fluide, puis on retire le tube et le bulbe du réservoir, et l'on écrase le bulbe pour distribuer une ou plusieurs goutte(s) de produit fluide sur une surface d'application souhaitée. Finalement, on repositionne le tube et le bulbe sur le réservoir de produit fluide à la manière d'un bouchon. On peut directement appuyer sur le bulbe à l'aide d'un doigt, ou en variante, le distributeur comprend un poussoir rigide sur lequel on peut appuyer pour déformer le bulbe.

Avec ce type de distributeur compte-gouttes, il est donc nécessaire d'agir préalablement sur le bulbe pour le remplir de produit fluide. Si l'utilisateur omet cette étape préalable, il risque de distribuer des gouttes incomplètes, ou encore de pulvériser le produit fluides, étant donné que la chambre peut être partiellement remplie d'air. Cela n'est vraiment pas le but recherché, étant donné que le distributeur compte-gouttes a pour fonction de distribuer des gouttes bien formée. La demande de brevet européen 2576379 A1 relevant de l'article 54 (3) CBE divulgue un distributeur compte-gouttes selon le préambule de la revendication 1 annexée.

Par conséquent, la présente invention a pour but de remédier à l'inconvénient précité de l'art antérieur en définissant un distributeur compte-gouttes dont le remplissage de la chambre de produit fluide est garanti. Un autre but de la présente invention est de rendre le remplissage de la chambre automatique. Encore un autre but de la présente invention est de garantir un remplissage identique de la chambre à chaque utilisation. Encore un autre but de la présente invention est de simplifier la gestuelle d'utilisation du distributeur compte-gouttes. Encore un autre but de la présente invention est d'empêcher tout actionnement intempestif ou involontaire du distributeur compte-gouttes. Encore un autre but de la présente invention est d'atteindre les buts précités sans ajouter trop de pièces supplémentaires au distributeur compte-gouttes.

Pour atteindre tous ces buts, la présente invention propose un distributeur compte-gouttes comprenant un réservoir de produit fluide ayant un col fileté, un tube ayant une extrémité de distribution conçue pour former une goutte de produit fluide et une extrémité d'actionnement, une chambre de produit fluide de volume variable connectée à l'extrémité d'actionnement du tube, la chambre pouvant être remplie et vidée à travers le tube, un poussoir déplaçable axialement entre une position haute et une position basse de manière à faire varier le volume de la chambre et refouler du produit fluide dans le tube vers l'extrémité de distribution pour former une goutte de produit fluide, une bague de fixation comprenant une jupe filetée destiné à venir en prise avec le col fileté du réservoir, le tube et la chambre étant solidaires de la bague, le distributeur comprennant en outre des moyens de déplacement pour déplacer axialement le poussoir entre les positions haute et basse, ces moyens de déplacement entraînant également la bague de fixation en rotation pour la dévisser du col et la visser sur le col, caractérisé en ce que les moyens de déplacement déplacent axialement le poussoir de la position basse vers la position haute avant le dévissage de la bague du col. En entraînant la bague de fixation en rotation pour la dévisser ou la visser, les moyens de déplacement remplissent une fonction neutre, en ce sens qu'ils n'induisent pas une fonction supplémentaire. Cependant, le fait de se servir du vissage et du dévissage pour déplacer axialement le poussoir entre les positions haute et basse présente un avantage important, du fait que le déplacement axial du poussoir ne nécessite pas d'autre gestuelle que celle du vissage et/ou du dévissage normales. En d'autres termes, le déplacement axial du poussoir découle directement des opérations de vissage et de dévissage de la bague de fixation à partir du col. Les moyens de déplacement ne modifient pas la gestuelle d'utilisation conventionnelle liée au vissage et au dévissage de la bague de fixation. Le déplacement axial du poussoir a lieu sans que l'utilisateur soit forcé de réaliser une opération spécifique. Il n'est même pas censé savoir que le dévissage et le vissage de la bague de fixation induisent le déplacement axial du poussoir. Grâce aux moyens de déplacement, le poussoir modifie le volume de la chambre de produit fluide de manière contrôlée et répétitive. On garantit ainsi que la chambre de produit fluide est toujours remplie avec la même quantité de produit fluide. De ce fait, l'enfoncement du poussoir par l'utilisateur aura toujours le même effet sur la distribution de gouttes.

Selon l'invention, les moyens de déplacement déplacent axialement le poussoir de la position basse vers la position haute avant le dévissage de la bague du col. Cela implique que le poussoir est en position basse avant dévissage de la bague. En d'autres termes, lorsque l'on ne se sert pas du distributeur, le poussoir est en position basse, correspondant au volume minimum de la chambre de produit fluide. Ce n'est qu'en dévissant la bague de fixation que le poussoir est déplacé vers sa position haute, correspondant au volume maximal de la chambre de produit fluide. Le déplacement du poussoir a lieu avant le dévissage de la bague du col, étant donné qu'après dévissage, la bague est totalement désolidarisée du col, et les moyens de déplacement ne pourraient alors plus agir sur le poussoir. Ainsi, l'utilisateur qui veut se servir du distributeur compte-gouttes va vouloir dévisser la bague du col, et ce faisant il va d'abord déplacer le poussoir vers la position haute, puis seulement effectivement dévisser la bague du col. Une gestuelle d'utilisation unique permet à la fois de déplacer le poussoir et de dévisser la bague du col, sans que l'utilisateur distingue clairement les deux fonctions accomplies.

Avantageusement, les moyens de déplacement sont montés rotatifs par rapport à la bague sur une course angulaire limitée sur laquelle le poussoir est déplacé axialement entre les positions haute et basse par les moyens de déplacement. En d'autres termes, les moyens de déplacement commencent d'abord par tourner autour de la bague, puis au bout d'une course angulaire limitée, les moyens de déplacement sont solidaires de la bague et l'entraînent en rotation autour du col. La course angulaire limitée correspond à la phase de déplacement axiale du poussoir.

Selon une autre caractéristique importante, les frottements entre les moyens de déplacement et la bague sont inférieurs aux frottements entre la bague et le col, au moins en début de dévissage. Cela est valable lors de la phase de dévissage, mais pas forcément lors de la phase de vissage. En effet, lors de la phase de vissage, il est nécessaire que le déplacement axial du poussoir ait lieu avant le dévissage de la bague du col. En revanche, lors de la phase de vissage, le déplacement axial du poussoir peut avoir lieu avant ou après la phase de vissage de la bague sur le col. En tout cas, il est nécessaire que le dévissage de la bague du col présente une résistance supérieure au déplacement axial du poussoir. Il n'est pas indispensable que les forces de frottement de la bague sur le col soient nécessairement supérieures aux forces de frottement du déplacement axial du poussoir tout au long de la phase de dévissage, mais uniquement au début de la phase de dévissage, qui peut par exemple correspondre à la force nécessaire à l'écrasement d'un joint de col. La compression de ce joint de col génère une résistance qui est supérieure à celle du déplacement axial du poussoir. Toutefois, dès que le joint cesse d'être comprimé, les forces de frottement en rotation de la bague sur le col peuvent être inférieures aux forces de frottement du déplacement axial du poussoir.

Selon un aspect pratique de l'invention, le poussoir est guidé axialement par rapport à la bague en étant bloqué en rotation par rapport à la bague. Selon un mode de réalisation, le poussoir entraîne la bague en rotation en position haute pour la dévisser du col et en position haute ou basse pour la visser sur le col. Cela signifie que le couple appliqué aux moyens de déplacement est transmis à la bague de fixation par l'intermédiaire du poussoir. En variante, la bague et les moyens de déplacement définissent ensemble deux butées angulaires délimitant la course angulaire, à savoir une butée de dévissage pour entraîner la bague dans le sens du dévissage alors que le poussoir est déjà en position haute, et une butée de vissage qui est atteinte lorsque le poussoir est de retour en position basse. Dans ce cas, le couple appliqué aux moyens de déplacement est directement transmis à la bague de fixation par l'intermédiaire des butées angulaires. Le poussoir ne sert alors plus de moyens de transmission de couple entre les moyens de déplacement et la bague de fixation. Il est toutefois envisageable dans le cadre de la présente invention d'utiliser des butées angulaires combinées à une transmission de couple par le poussoir.

Selon un mode de réalisation pratique, les moyens de déplacement comprennent une douille globalement cylindrique montée rotative sur la bague de fixation sur une course angulaire limitée, la douille formant au moins un chemin de came définissant deux extrémités axiales décalées, le poussoir étant bloqué en rotation sur la bague et comprenant au moins un ergot de came en prise avec le chemin de came de la douille, de sorte que la rotation de la douille par rapport à la bague amène l'ergot de came du poussoir à se déplacer le long du chemin de came de la douille entre ses deux extrémités axiales. Avantageusement, la douille s'étend autour de la bague et du poussoir, la bague et la douille définissant ensemble deux butées angulaires limitant la course angulaire, les deux butées correspondant sensiblement aux positions haute et basse du poussoir, respectivement en début de dévissage et en début ou fin de vissage de la bague sur le col. Entre les deux butées angulaires, l'ergot de came du poussoir se déplace le long du chemin de came entre ses deux extrémités axiales. L'ergot peut venir en butée contre les deux extrémités axiales, ou en variante, la force peut être reprise par les butées angulaires. En d'autres termes, il n'est pas nécessaire que le couple de torsion appliqué sur la douille soit transmis à la bague de fixation par l'intermédiaire des ergots de came du poussoir.

Selon un autre aspect avantageux, la douille est encliquetée sur la bague tout en tournant librement autour d'elle sur la course angulaire limitée par les butées angulaires. Durant cette course angulaire limitée, le poussoir est déplacé axialement entre ses positions haute et basse.

Selon un autre aspect classique, la bague de fixation comprend une couronne supérieure de guidage axial en prise de coulissement axial avec le poussoir, la douille comprenant une partie inférieure encliquetée sur la jupe tout en tournant librement autour d'elle sur la course angulaire limitée et une partie supérieure formant ledit au moins un chemin de came dans lequel les ergots de came du poussoir sont engagés.

Selon un autre aspect de l'invention, la chambre de produit fluide est formée avec une pièce souple qui est déformée par le poussoir entre les positions haute et basse, cette pièce souple étant avantageusement montée dans la bague de fixation La pièce souple peut se présenter sous la forme d'un bulbe écrasable conventionnel. A la place de cette pièce souple, on peut également prévoir un fût de coulissement qui coopère avec le poussoir à la manière d'un piston pour faire varier le volume de la chambre de produit fluide.

Un principe de l'invention repose sur le fait de se servir de l'opération conventionnelle de dévissage et de vissage pour déplacer le poussoir axialement afin de faire varier le volume de la chambre de produit fluide. Cela est réalisé au moyen d'une seule pièce supplémentaire qui agit à la fois sur la bague de fixation pour l'entraîner en rotation et sur le poussoir pour le déplacer axialement. Il faut bien noter que la gestuelle de dévissage et de vissage reste inchangée, de sorte que le déplacement axial du poussoir est transparent pour l'utilisateur. Grâce à ce déplacement axial induit du poussoir, on peut faire varier le volume de la chambre de produit fluide de manière précise et répétitive. En amenant le poussoir vers sa position haute en début de dévissage, on garantit à l'utilisateur que la chambre de produit fluide est toujours préalablement remplie de produit fluide avec une quantité prédéterminée. Il n'a donc plus besoin d'écraser le poussoir avant le dévissage. Cette opération est maintenant automatique grâce à l'invention.

L'invention sera maintenant plus amplement décrite en référence aux dessins joints, donnant à titre d'exemple non limitatif, un mode de réalisation de l'invention.

Sur les figures :
Les figures 1a et 1b sont des vues en coupe transversale verticale à travers un distributeur compte-gouttes selon l'invention, respectivement en position basse et haute du poussoir,
La figure 2 est une vue en coupe agrandie du distributeur de la figure 1 a sans le réservoir,
Les figures 3a et 3b sont des vues en coupe horizontale selon les lignes de coupe A-A et B-B de la figure 2,
La figure 4 est une vue agrandie de la figure 1b sans le réservoir,
Les' figures 5a et 5b sont des vues en coupe horizontale le long des lignes A-A et B-B de la figure 4,
La figure 6 est une vue en perspective éclatée du distributeur des figures précédentes, sans le réservoir, et
La figure 7 est une vue en perspective à l'état monté du distributeur des figures précédentes sans le réservoir.

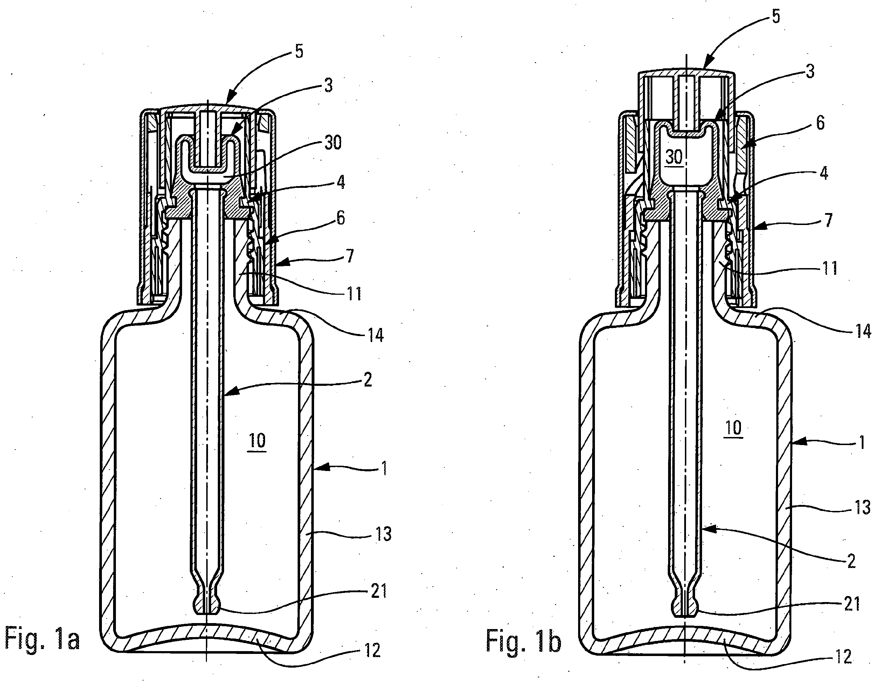

On se référera tout d'abord aux figures 1a et 1b pour décrire la structure générale d'un distributeur compte-gouttes selon une forme de réalisation non limitative de l'invention. Le distributeur compte-gouttes comprend sept éléments constitutifs, à savoir un réservoir de produit fluide 1, un tube 2, une pièce souple 3, une bague de fixation 4, un poussoir 5, une douille 6 et une frette d'habillage 7. Le distributeur compte-gouttes peut être divisé en deux sous-ensembles, à savoir un premier sous-ensemble constitué par le réservoir 1, et un second sous-ensemble constitué par les éléments constitutifs 2, 3, 4, 5, 6 et 7 et formant une tête de distribution. Cette tête de distribution est montée de manière amovible sur le réservoir par vissage/dévissage. Le tube 2 s'étend à l'intérieur du réservoir en étant monté sur la pièce souple 3 qui est en prise avec la bague de fixation 4 qui est fixée sur le réservoir. Le poussoir 5 est monté sur la bague de fixation 4 de manière déplaçable pour déformer la pièce souple 4. La douille 6 est en prise avec la bague 4 et coopère avec le poussoir 5 pour le déplacer entre une position basse représentée sur la figure 1 a et une position haute représentée sur la figure 1 b. La frette d'habillage 7 n'a qu'une fonction esthétique, et pourrait ainsi être omise.

Le réservoir de produit fluide 1 peut être tout à fait conventionnel et comprend un col fileté 11 qui fait saillie vers le haut à partir d'un épaulement 14. Le réservoir 1 comprend également un fond 12 et une paroi latérale 13 définissant intérieurement un volume utile 10 destiné à être au moins partiellement rempli de produit fluide. La forme et le matériau constitutif dû réservoir ne sont pas critiques pour la présente invention : il suffit que le réservoir comprenne un col fileté extérieurement, comme le col 11.

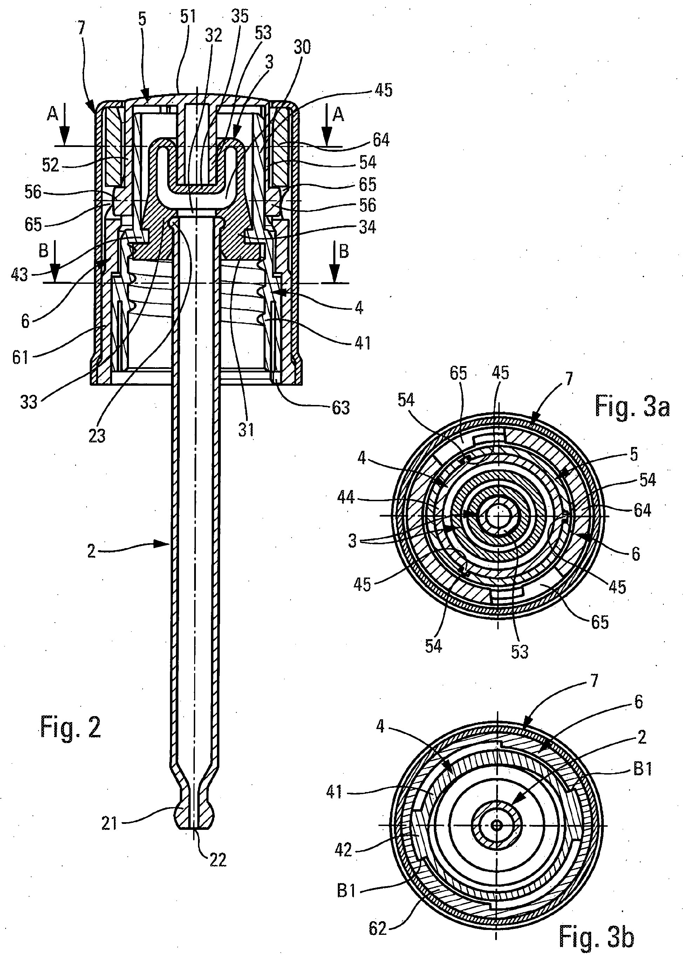

On se référera maintenant aux figures 2, 4, 6 et 7 pour décrire en détail la structure fine de la tête de distribution du distributeur compte-gouttes de l'invention.

Le tube 2 peut être réalisé en n'importe quel matériau approprié, comme du verre, de la matière plastique, du métal, etc. Le tube 2 comprend une extrémité de distribution 21 qui forme un conduit de distribution 22 de section réduite. L'extrémité de distribution 21 est conçue de manière à permettre la formation de gouttes, et à maintenir par capillarité du produit fluide à l'intérieur du tube. L'extrémité de distribution 21, ainsi que l'ensemble du tube 2, peuvent présenter une structure conventionnelle pour un distributeur compte-gouttes. Le tube 2 comprend également une extrémité supérieure d'actionnement 23 qui définit une ouverture large.

La pièce souple 3 peut être qualifiée de bulbe écrasable définissant une chambre de produit fluide 30 de volume variable par déformation de la pièce souple. Plus précisément, la pièce souple 3 comprend un joint de col intégré 31 destiné à venir en appui écrasé sur le col fileté 11 du réservoir, un premier logement de réception 34 pour la bague de fixation 4, un second logement de réception 33 pour l'extrémité d'actionnement 23 du tube 2, une sortie de chambre 32 qui communique directement avec le tube 2, et une paroi mobile 35 par déformation de la pièce souple 3. La pièce 3 définit ainsi une chambre de produit fluide 30 de volume variable qui communique avec le tube 2 à travers la sortie 32. Par déplacement de la paroi 35, le volume de la chambre 30 varie d'un minimum à un maximum, respectivement représenté sur les figures 1 a et 1 b.

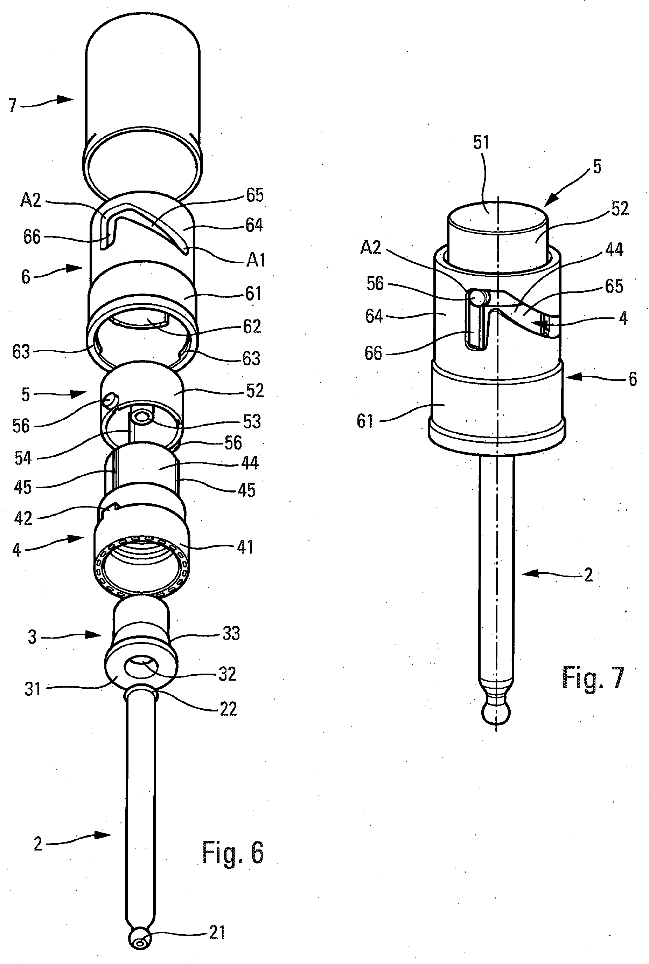

La bague de fixation 4 comprend une jupe filetée 41 destinée à venir en prise filetée avec le col fileté 11 du réservoir, comme on peut le voir sur les figures 1 a et 1 b. La jupe filetée 41 est pourvue extérieurement de deux pattes 42 qui s'étendent vers le haut, et clairement visible sur la figure 6. Ces deux pattes 42 coopèrent avec la douille 6, comme on le verra ci-après. Au-dessus de la jupe filetée 41, la bague 4 forme une bride 43 qui est reçue dans le premier logement de réception 34 de la pièce souple 3. La bride 43 peut par exemple être encliquetée dans le logement 34. Au-dessus de la bride 43, la bague 4 forme une couronne sensiblement cylindrique 45 dans laquelle s'étend la majeure partie de la pièce souple 3. Cette couronne 44 forme trois nervures axiales 45 au niveau de sa paroi externe. Ces nervures coopèrent avec le poussoir 5 comme on le verra ci-après.

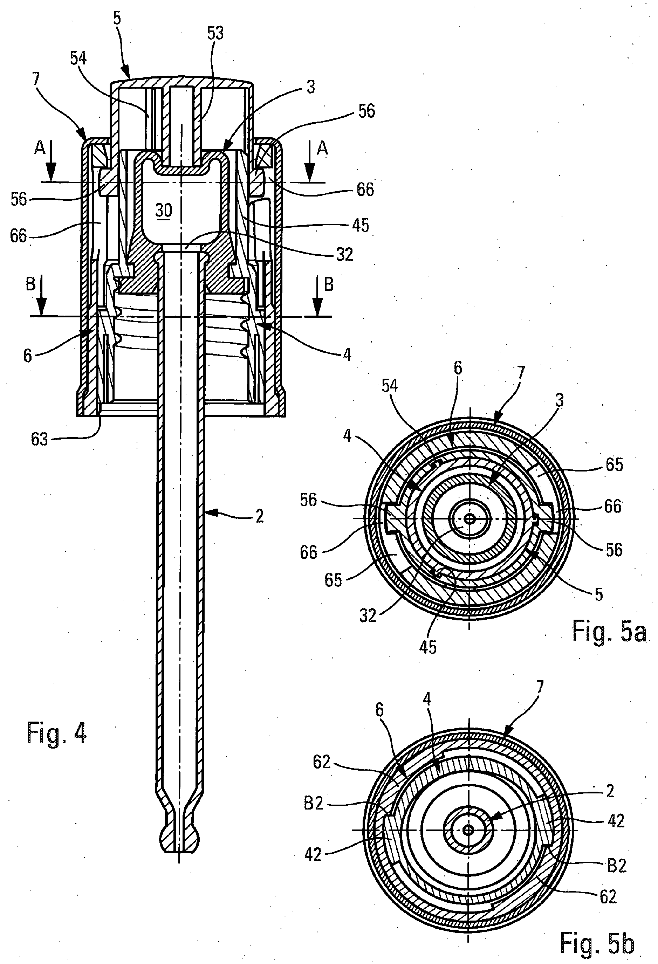

Le poussoir 5 comprend une surface d'appui supérieure 51 sur laquelle l'utilisateur peut appuyer à l'aide d'un ou de plusieurs doigt(s). Sur sa périphérie extérieure, la surface d'appui 51 se prolonge vers le bas par une enveloppe sensiblement cylindrique 52 qui s'étend autour de la couronne 45 de la bague 4. Pour coopérer avec les nervures axiales 45 de la couronne 44, la paroi interne de l'enveloppe 52 est pourvue de trois rainures axiales 54 dans lesquelles sont engagées les nervures axiales 45, comme on peut le voir sur les vues en coupe des figures 3a et 5a. L'engagement mutuel des nervures 45 et rainures 54 conduit à un guidage axial du poussoir sur la bague, sans autoriser de mouvement rotatif mutuel. En d'autres termes, le poussoir 5 peut coulisser axialement sur la bague 4 tout en étant bloqué en rotation. Le déplacement du poussoir 5 par guidage axial se fait entre les positions basse et haute représentées sur les figures 1 a et 1b. Le poussoir 5 comprend également une tige d'actionnement 53 qui vient en prise avec la paroi mobile 35 de la pièce souple 3. La tige fait saillie vers le bas.à partir de la surface d'appui 51 et déplace la paroi mobile 35 en déformant la pièce souple 3, comme on peut le voir en comparant les figures 1a et 1b. Le poussoir 5 comprend également deux ergots de came 56 qui font saillie vers l'extérieur de manière diamétralement opposée à partir de l'enveloppe cylindrique 52. Ces ergots de came 56 sont formés à proximité du bord inférieur de l'enveloppe 52, comme on peut le voir sur les figures.

La douille 6 est engagée autour de la bague de fixation 4 et du poussoir 5. On peut également dire que l'enveloppe 52 du poussoir 5 s'étend entre la couronne 45 et la douille 6. La douille comprend une partie inférieure 61 qui est engagée autour de la jupe filetée 41 de manière rotative sur une course angulaire limitée. La partie inférieure 61 peut par exemple former des secteurs d'encliquetage 63 destinés en prise non serrante sous la jupe filetée 41. Ainsi, la douille 6 peut tourner librement autour de la bague de fixation 4 sur une course limitée. Pour limiter cette course angulaire, la douille 6 forme intérieurement deux renforts 62 qui s'étendent de manière diamétralement opposée. Un de ces secteurs est très visible sur la figure 6. Les deux secteurs sont également visibles sur les figures 3b et 5b. Les deux pattes 42 de la bague de fixation 4 sont disposées entre les deux renforts 62 de la douille 6, de sorte que les pattes 42 peuvent se déplacer sur une course angulaire limitée entre les deux renforts 62. Chaque extrémité de la course angulaire forme deux butées B1, B2, visibles sur les figures 3b et 5b. Les butées angulaires B1 de la figure 3b sont des butées de vissage permettant à la douille 6 d'entraîner la bague 4 dans le sens du vissage, alors que les butées B2 de la figure 5b sont des butées de dévissage permettant à la douille 6 d'entraîner la bague 4 dans le sens du dévissage. La douille 6 est ainsi librement rotative sur la bague 4 sur une course angulaire limitée, qui peut par exemple correspondre à 90°.

La douille 6 comprend également une partie supérieure 64 qui forme deux chemins de came 65 reliés à deux cheminées d'actionnement 66, comme visible sur les figures 6 et 7. Plus précisément, chaque chemin de came 65 définit une extrémité axiale basse A1 et une extrémité axiale haute A2 à partir de laquelle la cheminée axiale 66 s'étend vers le bas. Les chemins de came 65 et les cheminées 66 peuvent être formés uniquement à l'intérieur de la partie supérieure 64 de la douille, ou en variante, ils peuvent traverser l'épaisseur de paroi de la douille, comme c'est le cas sur les figures. Les deux ergots de came 56 du poussoir 5 sont engagés respectivement dans les chemins de came 65 et les cheminées 66. En position basse du poussoir 5, les deux ergots de came 56 sont situés au niveau des extrémités axiales basses A1, et dans la position haute du poussoir, les deux ergots de came 56 sont situés au niveau des extrémités axiales hautes A2, comme visible sur la figure 7. Dans la position haute du poussoir, on peut aisément comprendre que le poussoir peut être enfoncé axialement, étant donné que les ergots de came 56 peuvent alors se déplacer axialement dans les cheminées axiales 66 sur une course axiale limitée. Etant donné que le poussoir 5 est bloqué en rotation par rapport à la bague 4, du fait de l'imbriquement des rainures/nervures axiales 45, 54, le poussoir 5 est contraint de se déplacer axialement lorsque la douille 6 est entraînée en rotation par rapport à la bague 4. Les ergots de came 56 sont alors contraints de se déplacer le long des chemins de came 65 entre les extrémités axiales basse A1 et haute A2. Le déplacement des ergots 56 dans les chemins de came 65 correspond à une course angulaire limitée qui correspond à la course angulaire limitée définie par les butées B1 et B2 au niveau des pattes 42 qui coopèrent avec les renforts 62. On peut par exemple prévoir que les ergots de came 56 sont positionnés au niveau des extrémités axiales hautes A2 des chemins de came 65 lorsque les butées B2 sont opérantes. Il n'est pas nécessaire que les ergots 56 viennent en contact appuyé avec les extrémités axiales hautes A2, le couple de torsion exercée sur la douille 6 pouvant être entièrement reprise par les butées B2. En variante, on peut également prévoir qu'il n'y a pas de pattes 42 et pas de renforts 62 de sorte qu'il n'y a pas de butées entre la douille 6 et la bague 4. Dans ce cas, le couple de torsion exercée sur la douille 6 est entièrement supporté par les ergots 56 en contact appuyé contre les extrémités axiales hautes A2. Il en est de même pour l'extrémité axiale basse A1 qui correspond aux butées B1 de la figure 3b. On comprend aisément que les butées B1 et B2 ont pour seul but de transmettre le couple de rotation de la douille 6 directement à la bague 4, sans passer par le poussoir 5. Cependant, il est possible de prévoir une variante utilisant le poussoir 5 comme transmetteur de couple. On pourrait alors prévoir de renforcer les ergots 56, les nervures 45 et les rainures 54.

Ainsi, la douille 6 constitue des moyens de déplacement permettant non seulement d'entraîner la bague 4 en rotation pour son vissage/dévissage du col 11, mais également de déplacer axialement le poussoir 5 qui est bloqué en rotation sur la bague 4. Le déplacement axial du poussoir 5 se produit lors de la course angulaire limitée entre la douille 6 et la bague 4. Cette course angulaire peut être limitée soit par les butées B1, B2, soit par les extrémités axiales A1, A2, soit par une combinaison des deux.

La frette d'habillage 7 permet d'habiller, la douille 6 qui est peu esthétique avec ses chemins de came 65 et ses cheminées 66. La frette: d'habillage 7 est montée fixement sur la douille 6, par exemple par serrage, et/ou à l'aide de profils d'accrochage intérieurs. La frette 7 peut par exemple être réalisée en métal pour des raisons esthétiques. Elle définit un rabat rentrant formant une ouverture à travers laquelle s'étend le poussoir 5.

On se référera maintenant à l'ensemble des figures pour décrire un cycle complet d'utilisation de ce distributeur compte-gouttes selon l'invention à partir de la position basse du poussoir 5 lorsque la tête de distribution est en place sur le réservoir, comme représenté sur la figure 1 a. Cette position correspond à la fin d'une opération de vissage de la bague 4 sur le col fileté 11. Le poussoir 5 est en position basse : ces ergot de came 56 sont disposés au niveau des extrémités axiales basses A1. Les pattes 42 et les renforts 62 sont en butée angulaire B1, comme visible sur la figure 3b. La chambre de produit fluide 30 définit un volume interne minimal. L'extrémité de distribution 21 du tube 2 est plongée dans le produit fluide contenu dans le réservoir 1. Le joint intégré 31 de la pièce souple 3 est comprimé au maximum sur le bord annulaire supérieur du col 11, générant ainsi des forces de frottement importantes.

A partir de cette position correspond à la fin d'une opération de vissage, l'utilisateur va commencer à faire tourner la douille 6 en saisissant la frette d'habillage 7.

Les forces de frottement entre la douille 6 et la bague 4 sont bien inférieures aux forces de frottement entre le joint intégré 31 et le col 11, de sorte que la douille 6 tourne sur elle-même sans entraîner la bague 4. La rotation libre de la douille va entraîner le déplacement axial du poussoir 5 de sa position basse vers sa position haute, comme représenté sur les figures 1b et 4. Les ergots de came 56 ont alors parcouru la totalité du chemin de came 65 pour parvenir à l'extrémité axiale haute A2. Simultanément, les pattes 42 se sont déplacées entre les renforts 62 pour atteindre les autres butées angulaires B2, comme représenté sur la figure 5b Les ergots de came 56 sont alors positionnés verticalement au-dessus des cheminées 66, comme on peut le voir sur les figures 4 et 5a.

Une fois que le poussoir 5 a atteint sa position haute, l'utilisateur va ressentir une certaine résistance qui correspond aux forces de frottement dues à la compression du joint intégré 31 sur le col 11. En surmontant cette résistance, la douille 6 va entraîner la bague 4 en rotation dans le sens du dévissage, le couple étant transmis au niveau des butées B2. L'utilisateur peut alors terminer l'opération de dévissage, jusqu'à séparation de la tête de distribution du réservoir.

L'utilisateur peut alors actionner le poussoir 5 de manière à distribuer une ou plusieurs goutte(s) de produit fluide. Une fois la distribution terminée, l'utilisateur positionne à nouveau la tête de distribution sur le réservoir dans le but de revisser la bague 4 sur le col fileté.

Deux modes opératoires sont alors possibles. Dans un premier mode opératoire, les forces de frottement lors du vissage sont inférieures aux forces de frottement générées lors du déplacement axial du poussoir. Dans ce cas, la bague de fixation 4 est entraînée en rotation par la douille.6 en conservant les butées angulaires B2. L'opération de vissage se poursuit jusqu'à ce que le joint intégré 31 vienne à nouveau en contact avec le bord annulaire du col fileté 11. Les forces de frottement augmentent alors subitement de manière à excéder les forces de frottement générées lors du déplacement axial du poussoir. La douille 6 va alors tourner librement autour de la bague 4 sur la course angulaire limitée de manière à déplacer le poussoir 5 en position basse. Au cours de la rotation libre de la douille 6 sur la bague 4, les ergots de came 56 vont se déplacer dans le chemin de came pour regagner les extrémités axiales basses A1 et les pattes 42 vont se déplacer entre les renforts 62 pour atteindre les butées angulaires B1. La rotation de la douille 6 n'est alors presque plus possible, sauf à comprimer encore un peu le joint intégré 31.

La seconde option présuppose que les forces de frottement lors du vissage sont supérieures aux forces de frottement liées au déplacement axial du poussoir 5. Dans ce cas, le déplacement axial du poussoir vers sa position basse a lieu avant le vissage de la bague 4 sur le col 11. La rotation de la douille 6 a donc pour effet immédiat de la déplacer par rapport à la bague 4 sur la course angulaire limitée, au cours de laquelle le poussoir 5 va regagner sa position basse. Les ergots de came 56 se sont déplacés le long du chemin de came vers les extrémités axiales basse A1 et les pattes 42 sont déplacées par rapport aux renforts 62 pour regagner les butées angulaires B1. A partir de là, la rotation de la douille 6 a pour effet d'entraîner directement la bague 4 en rotation sur le col 11 dans le sens du vissage. En fin de vissage, l'utilisateur perçoit une résistance correspondant à l'écrasement du joint intégré 31 qui marque la fin du vissage.

Dans le mode de réalisation des figures, la chambre de produit fluide 30 est réalisée par une pièce souple 3. En variante, on peut également réaliser une chambre de volume variable comprenant un fût de coulissement dans lequel coulisse un piston, par exemple solidaire du poussoir 5. Comme déjà susmentionné, les butées angulaires B1 et B2 sont optionnelles, mais préférables. Le joint de col a été intégré à la pièce souple 3, mais on peut également envisager d'utiliser un joint de col séparé. La pièce souple 3 et le poussoir 5 sont ici réalisés à partir de deux pièces séparées, mais on peut également imaginer de réaliser ces deux pièces de manière monobloc. La frette d'habillage 7 est une pièce optionnelle esthétique qui peut être omise.

Grâce à l'invention, le simple vissage/dévissage de la bague 4 à partir du col 11 du réservoir permet en outre de générer le déplacement axial du poussoir 5 qui modifie le volume interne de la chambre de produit fluide 30. En position de repos et/ou de stockage, la bague 4 est vissée à fond sur le col du réservoir, avec le poussoir en position basse, définissant un volume minimal pour la chambre de produit fluide. Au dévissage, le poussoir se déplace en position haute, permettant à la chambre d'augmenter le volume interne et de se remplir avec une quantité de produit fluide déterminée. L'utilisateur n'a donc plus besoin d'effectuer l'opération préalable de remplissage de la chambre de produit fluide avant distribution des gouttes. La chambre est remplie de manière automatique, précise et répétitive.

## Revendications

1. Distributeur compte-gouttes comprenant :
- un réservoir de produit fluide (1) ayant un col fileté (11),
- un tube (2) ayant une extrémité de distribution (21) conçue pour former une goutte de produit fluide et une extrémité d'actionnement (23),
- une chambre de produit fluide (30) de volume variable connectée à l'extrémité d'actionnement (23) du tube (2), la chambre (30) pouvant être remplie et vidée à travers le tube (2),
- un poussoir (5) déplaçable axialement entre une position haute et une position basse de manière à faire varier le volume de la chambre (30) et refouler du produit fluide dans le tube (2) vers l'extrémité de distribution (21) pour former une goutte de produit fluide,
- une bague de fixation (4) comprenant une jupe filetée (41) destiné à venir en prise avec le col fileté (11) du réservoir (1), le tube (2) et la chambre (30) étant solidaires de la bague (4),
- des moyens de déplacement (6, 7) pour déplacer axialement le poussoir (5) entre les positions haute et basse, ces moyens de déplacement entraînant également la bague de fixation (4) en rotation pour la dévisser du col (11) et la visser sur le col (11),
**caractérisé en ce que** les moyens de déplacement (6, 7) déplacent axialement le poussoir (5) de la position basse vers la position haute avant le dévissage de la bague du col (11)

2. Distributeur compte-gouttes selon la revendication 1 ou 2, dans lequel les moyens de déplacement (6, 7) sont montés rotatifs par rapport à la bague (4) sur une course angulaire limitée sur laquelle le poussoir (5) est déplacé axialement entre les positions haute et basse par les moyens de déplacement (6, 7).

3. Distributeur compte-gouttes selon l'une quelconque des revendications précédentes, dans lequel les frottements entre les moyens de déplacement (6, 7) et la bague (4) sont inférieurs aux frottements entre la bague (4) et le col (11), au moins en début de dévissage.

4. Distributeur compte-gouttes selon l'une quelconque des revendications précédentes, dans lequel le poussoir (5) est guidé axialement par rapport à la bague (4) en étant bloqué en rotation par rapport à la bague.

5. Distributeur compte-gouttes selon la revendication 4, dans lequel le poussoir (5) entraîne la bague (4) en rotation en position haute pour la dévisser du col (11) et en position haute ou basse pour la visser sur le col.

6. Distributeur compte-gouttes selon la revendication 2, dans lequel la bague (4) et les moyens de déplacement (6, 7) définissent ensemble deux butées angulaires (B1, B2) délimitant la course angulaire, à savoir une butée de dévissage (B1) pour entraîner la bague (4) dans le sens du dévissage alors que le poussoir (5) est déjà en position haute, et une butée de vissage (B2) qui est atteinte lorsque le poussoir (5) est de retour en position basse.

7. Distributeur compte-gouttes selon l'une quelconque des revendications précédentes, dans lequel les moyens de déplacement comprennent une douille globalement cylindrique (6) montée rotative sur la bague de fixation (4) sur une course angulaire limitée, la douille (6) formant au moins un chemin de came (65) définissant deux extrémités axiales décalées (A1, A2), le poussoir (5) étant bloqué en rotation sur la bague (4) et comprenant au moins un ergot de came (56) en prise avec le chemin de came (65) de la douille (6), de sorte que la rotation de la douille (6) par rapport à la bague (4) amène l'ergot de came (56) du poussoir (5) à se déplacer le long du chemin de came (65) de la douille entre ses deux extrémités axiales (A1, A2).

8. Distributeur compte-gouttes selon la revendication 7, dans lequel la douille (6) s'étend autour de la bague (4) et du poussoir (5), la bague (4) et la douille (6) définissant ensemble deux butées angulaires (B1, B2) limitant la course angulaire, les deux butées (B1, B2) correspondant sensiblement aux positions haute et basse du poussoir, respectivement en début de dévissage et en début ou fin de vissage de la bague sur le col.

9. Distributeur compte-gouttes selon la revendication 8, dans laquelle la douille (6) est encliquetée sur la bague (4) tout en tournant librement autour d'elle sur la course angulaire limitée par les butées angulaires (B1, B2).

10. Distributeur compte-gouttes selon la revendication 7, 8 ou 9, dans laquelle la bague de fixation (4) comprend une couronne supérieure de guidage axial (44) en prise de coulissement axial avec le poussoir (5), la douille (6) comprenant une partie inférieure (61) encliquetée sur la jupe (41) tout en tournant librement autour d'elle sur la course angulaire limitée et une partie supérieure (64) formant ledit au moins un chemin de came (65) dans lequel les ergots de came (56) du poussoir (5) sont engagés.

11. Distributeur compte-gouttes selon l'une quelconque des revendications précédentes, dans lequel la chambre de produit fluide (30) est formée avec une pièce souple (3) qui est déformée par le poussoir (5) entre les positions haute et basse, cette pièce souple (3) étant avantageusement montée dans la bague de fixation (4).

## Patentansprüche

1. Tropfen zählender Spender, aufweisend:
- einen Behälter für fluides Produkt (1), der einen mit Gewinde versehenen Kragen (11) aufweist,
- ein Rohr (2) mit einem Ausgabeende (21), das dafür ausgelegt ist, einen Tropfen von fluidem Produkt zu bilden, und einem Betätigungsende (23),
- eine Kammer für fluides Produkt (30) von variablem Volumen, die mit dem Betätigungsende (23) des Rohres (2) verbunden ist, wobei die Kammer (30) über das Rohr (2) gefüllt und geleert werden kann,
- eine Druckvorrichtung (5), die axial zwischen einer oberen Position und einer unteren Position derart verschoben werden kann, dass bewirkt wird, dass sich das Volumen der Kammer (30) verändert und fluides Produkt in das Rohr (2) in Richtung zum Ausgabeende (21) befördert wird, um einen Tropfen von fluidem Produkt zu bilden,
- einen Befestigungsring (4), der einen mit Gewinde versehenen Mantel (41) aufweist, der dazu gedacht ist, mit dem mit Gewinde versehenen Kragen (11) des Behälters (1) in Eingriff zu kommen, wobei das Rohr (2) und die Kammer (30) mit dem Ring (4) einstückig sind,
- Verschiebemittel (6, 7) zum axialen Verschieben der Druckvorrichtung (5) zwischen der oberen und der unteren Position, wobei diese Verschiebemittel auch den Befestigungsring (4) drehend mitnehmen, um ihn vom Kragen (11) abzuschrauben und auf den Kragen (11) aufzuschrauben,
**dadurch gekennzeichnet, dass** die Verschiebemittel (6, 7) die Druckvorrichtung (5) vor dem Abschrauben des Rings vom Kragen (11) axial von der unteren Position in die obere Position verschieben.

2. Tropfen zählender Spender nach Anspruch 1 oder 2, wobei die Verschiebemittel (6, 7) in Bezug auf den Ring (4) auf einem begrenzten Winkelweg drehend montiert sind, auf dem die Druckvorrichtung (5) durch die Verschiebemittel (6, 7) axial zwischen der oberen und der unteren Position verschoben wird.

3. Tropfen zählender Spender nach einem der vorhergehenden Ansprüche, wobei die Reibungen zwischen den Verschiebemitteln (6, 7) und dem Ring (4) zumindest zu Beginn des Abschraubens geringer sind als die Reibungen zwischen dem Ring (4) und dem Kragen (11).

4. Tropfen zählender Spender nach einem der vorhergehenden Ansprüche, wobei die Druckvorrichtung (5) axial in Bezug auf den Ring (4) geführt wird und in Bezug auf den Ring drehfest ist.

5. Tropfen zählender Spender nach Anspruch 4, wobei die Druckvorrichtung (5) den Ring (4) drehend in die obere Position mitnimmt, um ihn vom Kragen (11) abzuschrauben, und ihn in die obere oder untere Position mitnimmt, um ihn auf den Kragen aufzuschrauben.

6. Tropfen zählender Spender nach Anspruch 2, wobei der Ring (4) und die Verschiebemittel (6; 7) zusammen zwei Winkelanschläge (B1, B2) definieren, die den Winkelweg beschränken, nämlich einen Abschraubanschlag (B1), um den Ring (4) in Abschraubrichtung mitzunehmen, während sich die Druckvorrichtung (5) bereits in der oberen Position befindet, und einen Aufschraubanschlag (B2), der erreicht wird, wenn sich die Druckvorrichtung (5) wieder in der unteren Position befindet.

7. Tropfen zählender Spender nach einem der vorhergehenden Ansprüche, wobei die Verschiebemittel eine im Allgemeinen zylindrische Buchse (6) aufweisen, die drehend auf einem begrenzten Winkelweg auf dem Befestigungsring (4) montiert ist; wobei die Buchse (6) mindestens einen Nockenkanal (65) bildet, der zwei axiale versetzte Enden (A1, A2) definiert, wobei die Druckvorrichtung (5) auf dem Ring (4) drehfest ist und mindestens einen Nockenvorsprung (56) im Eingriff mit dem Nockenkanal (65) der Buchse (6) aufweist, so dass die Drehung der Buchse (6) in Bezug auf den Ring (4) den Nockenvorsprung (56) der Druckvorrichtung (5) dazu bringt, sich entlang des Nockenkanals (65) der Buchse zwischen seinen beiden axialen Enden (A1, A2) zu verschieben.

8. Tropfen zählender Spender nach Anspruch 7, wobei sich die Buchse (6) um den Ring (4) und die Druckvorrichtung (5) herum erstreckt, wobei der Ring (4) und die Buchse (6) zusammen zwei Winkelanschläge (B1, B2) bilden, die den Winkelweg begrenzen, wobei die beiden Anschläge (B1, B2) zu Beginn des Abschraubens bzw. zu Beginn oder am Ende des Aufschraubens des Rings auf dem Kragen im Wesentlichen der oberen und der unteren Position der Druckvorrichtung entsprechen.

9. Tropfen zählender Spender nach Anspruch 8, wobei die Buchse (6) auf dem Ring (4) eingerastet wird und sich dabei frei um diesen auf dem Winkelweg dreht, der durch die Winkelanschläge (B1, B2) begrenzt ist.

10. Tropfen zählender Spender nach Anspruch 7, 8 oder 9, wobei der Befestigungsring (4) einen oberen axialen Führungskranz (44) in gleitendem axialem Eingriff mit der Druckvorrichtung (5) aufweist, wobei die Buchse (6) einen unteren Teil (61), der auf dem Mantel (41) eingerastet ist und sich dabei frei um diesen auf dem begrenzten Winkelweg drehen kann, und einen oberen Teil (64) aufweist, der den mindestens einen Nockenkanal (65) bildet, in dem die Nockenvorsprünge (56) der Druckvorrichtung (5) im Eingriff sind.

11. Tropfen zählender Spender nach einem der vorhergehenden Ansprüche, wobei die Kammer für fluides Produkt (30) mit einem flexiblen Stück (3) gebildet ist, das durch die Druckvorrichtung (5) zwischen der oberen und der unteren Position verformt wird, wobei dieses flexible Stück (3) vorteilhafterweise in dem Befestigungsring (4) montiert ist.

## Claims

1. A drop dispenser comprising:
. a fluid reservoir (1) having a threaded neck (11);
. a tube (2) having a dispenser end (21) that is designed to form a drop of fluid, and an actuation end (23) ;
. a fluid chamber (30) of variable volume, connected to the actuation end (23) of the tube (2), the chamber (30) being suitable for being filled and emptied through the tube (2);
. a pusher (5) that is axially movable between a high position and a low position so as to cause the volume of the chamber (30) to vary and drive the fluid into the tube (2) towards the dispenser end (21) so as to form a drop of fluid; and
. a fastener ring (4) including a threaded skirt (41) for coming into engagement with the threaded neck (11) of the reservoir (1), the tube (2) and the chamber (30) being secured to the ring (4);
. mover means (6, 7) for moving the pusher (5) axially between the high and low positions, the mover means also causing the fastener ring (4) to turn, both so as to loosen it from the neck (11) by unscrewing and so as to tighten it onto the neck (11) by screw-tightening,
the drop dispenser being **characterized in that** the mover means (6, 7) move the pusher (5) axially from the low position to the high position before the ring is loosened from the neck (11).

2. A drop dispenser according to claim 1, wherein the mover means (6, 7) are mounted to turn relative to the ring (4) over a limited angular stroke over which the pusher (5) is moved axially between the high and low positions by the mover means (6, 7).

3. A drop dispenser according to any preceding claim, wherein the friction between the mover means (6, 7) and the ring (4) is less than the friction between the ring (4) and the neck (11), at least at the start of loosening.

4. A drop dispenser according to any preceding claim, wherein the pusher (5) is guided axially relative to the ring (4) while being prevented from turning relative to the ring.

5. A drop dispenser according to claim 4, wherein, in its high position, the pusher (5) causes the ring (4) to turn so as to loosen it from the neck (11), and in its high or low position the pusher (5) causes the ring (4) to turn so as to tighten it on the neck.

6. A drop dispenser according to claim 2, wherein the ring (4) and the mover means (6, 7) co-operate with each other to define two angular abutments (B1, B2) that define the angular stroke, namely a loosening abutment (B1) for driving the ring (4) in the loosening direction while the pusher (5) is already in its high position, and a tightening abutment (B2) that is reached when the pusher (5) returns to its low position.

7. A drop dispenser according to any preceding claim, wherein the mover means comprise a generally cylindrical bushing (6) that is mounted to turn on the fastener ring (4) over a limited angular stroke, the bushing (6) forming at least one cam path (65) that defines two offset axial ends (A1, A2), the pusher (5) being prevented from turning on the ring (4) and including at least one cam lug (56) that is engaged with the cam path (65) of the bushing (6), such that turning the bushing (6) relative to the ring (4) causes the cam lug (56) of the pusher (5) to move along the cam path (65) of the bushing between its two axial ends (A1, A2).

8. A drop dispenser according to claim 7, wherein the bushing (6) extends around the ring (4) and the pusher (5), the ring (4) and the bushing (6) co-operating with each other to define two angular abutments (B1, B2) that limit the angular stroke, the two abutments (B1, B2) corresponding substantially to the high and low positions of the pusher, respectively at the start of loosening the ring from the neck, and at the beginning or the end of tightening the ring on the neck.

9. A drop dispenser according to claim 8, wherein the bushing (6) is snap-fastened on the ring (4) while being free to turn about its own axis over an angular stroke that is limited by the angular abutments (B1, B2).

10. A drop dispenser according to claim 7, 8, or 9, wherein the fastener ring (4) includes a top axial guidance collar (44) that is in axial sliding engagement with the pusher (5), the bushing (6) comprising a bottom portion (61) that is snap-fastened on the skirt (41) while being free to turn about its own axis over the limited angular stroke, and a top portion (64) that forms said at least one cam path (65) in which the cam lugs (56) of the pusher (5) are engaged.

11. A drop dispenser according to any preceding claim, wherein the fluid chamber (30) is formed with a flexible part (3) that is deformed by the pusher (5) between the high and low positions, the flexible part (3) advantageously being mounted in the fastener ring (4).
